# EUROPÄISCHE PATENTSCHRIFT

(11) **EP 2 703 947 B1**
(45) Veröffentlichungstag und Bekanntmachung des Hinweises auf die Patenterteilung: **27.02.2019**
(21) Anmeldenummer: 12181895.9
(22) Anmeldetag: 27.08.2012
(51) Int. Cl.: G06F 3/01, G06F 3/0484, G06F 3/0488

(54) **Bedieneinrichtung für ein technisches System**
Operating device for a technical system
Dispositif de commande pour un système technique

(43) Veröffentlichungstag der Anmeldung: 05.03.2014
(73) Patentinhaber: Siemens Aktiengesellschaft, 80333 München (DE)
(72) Erfinder: Dombrowski, Sascha, 90475 Nürnberg (DE); Jöhnßen, Oliver, 91058 Erlangen (DE)

(56) Entgegenhaltungen:
- WO-A1-2010/105006
- US-A1- 2010 231 367
- US-A1- 2011 248 916
- US-B2- 7 292 227
- OLIVIER BAU ET AL: "TeslaTouch", PROCEEDINGS OF THE 23ND ANNUAL ACM SYMPOSIUM ON USER INTERFACE SOFTWARE AND TECHNOLOGY, UIST '10, 1. Januar 2010 (2010-01-01), Seite 283, XP055016137, New York, New York, USA DOI: 10.1145/1866029.1866074 ISBN: 978-1-45-030271-5

## Beschreibung

Die Erfindung betrifft eine Bedieneinrichtung für ein technisches System.
Zur Bedienung eines technischen Systems, wie z.B. einer industriellen Anlage oder eines Teils davon, sind berührungsempfindliche Bedienfelder in der Form von sog. Touch-Displays bekannt, bei denen der Bediener durch Berühren der Oberfläche des Displays Bedienbefehle eingibt. Dabei erweist es sich als problematisch, dass der Bediener seinen Blick meist nicht auf das Bedienfeld, sondern auf das zu bedienende technische System richtet (sog. Halbblindbedienung). Gleichzeitig ist jedoch zum Verstellen entsprechender Parameter des technischen Systems ein Blick auf das Bedienfeld erforderlich, um nicht versehentlich von der betätigten Schaltfläche abzurutschen oder den Wertebereich eines Parameters zu groß zu verstellen.
Zur Vermeidung von Fehlbedienungen wird herkömmlicherweise bei kritischen Bedienvorgänge auf die Verwendung von berührungsempfindlichen Bedienfeldern verzichtet und weiterhin ein herkömmliches Tastengerät verwendet. Im Vergleich zu berührungsempfindlichen Bedienfeldern sind solche Tastengeräte teurer, größer und damit unhandlicher.

In der Druckschrift WO 2010/105006 A1 wird eine Bedieneinrichtung mit einem berührungsempfindlichen Bedienfeld beschrieben, bei dessen Berührung ein haptischer Effekt durch Variierung von Reibkräften erzeugt wird. In einem Ausführungsbeispiel wird vorgeschlagen, dem Benutzer bei Bedienung eines Schiebereglers den jeweils aktuellen Einstellwert des Reglers durch eine entsprechend erzeugte Reibkraft auf dem haptischen Weg zu vermitteln. Zur Erzeugung unterschiedlicher Reibkräfte am berührungsempfindlichen Bedienfeld werden neben elektromechanischen auch elektrostatische Aktoren in Erwägung gezogen. In dem Dokument US 7 292 227 B2 ist eine elektronische Vorrichtung mit einem oszillierenden Aktor offenbart, der Vibrationen generiert, wenn eine Eingabe an einem berührungsempfindlichen Bedienfeld der Vorrichtung detektiert wird.
Aufgabe der Erfindung ist es deshalb, eine Bedieneinrichtung für ein technisches System, insbesondere zur Parameterverstellung einer industriellen Anlage, zu schaffen, welches zumindest ein berührungsempfindliches Bedienfeld umfasst und dabei Fehlbedienungen an diesem Bedienfeld vermeidet.
Diese Aufgabe wird durch die Bedieneinrichtung gemäß Patentanspruch 1 gelöst. Weiterbildungen der Erfindung sind in den abhängigen Ansprüchen definiert.
Die erfindungsgemäße Bedieneinrichtung, welche zur Bedienung eines technischen Systems vorgesehen ist, umfasst zumindest ein berührungsempfindliches Bedienfeld, das bei Bewegung zumindest eines Fingers eines Bedieners auf seiner Oberfläche basierend auf Elektrovibration eine einstellbare und für den Bediener wahrnehmbare Reibung bzw. Reibkraft erzeugt. Dabei ist in dem zumindest einen Bedienfeld eine Anzahl von Bedienelementen vorgesehen, wobei durch Berührung eines jeweiligen Bedienelements mit zumindest einem Finger des Bedieners und durch eine Fingerbewegung die Reibkraft erzeugt und ein Bedienbefehl generiert wird. Zumindest ein Teil der Bedienbefehle sind dabei Steuerbefehle für das technische System.

Berührungsempfindliche Bedienfelder basierend auf Elektrovibration sind an sich aus dem Stand der Technik bekannt. Dabei wird an eine Elektrode mit darauf befindlicher Isolationsschicht eine Wechselspannung angelegt, wobei beim Berühren und Bewegen des Fingers eines Bedieners eine Reibkraft bzw. Reibung erzeugt wird. Hierüber kann die von dem Bediener wahrnehmbare Rauheit bzw. Gleitfähigkeit des Bedienfelds bzw. der Bedienelemente eingestellt werden. Im Folgenden ist unter dem Begriff des Berührens immer eine Berührung mit einem Finger des Bedieners zu verstehen. Ferner ist zu berücksichtigen, dass selbst ein Berühren des Bedienfelds ohne vom Bediener gewünschter Bewegung auf der Oberfläche des Bedienfelds zu einer Reibkraft führt, da mit jeder Berührung auch immer eine geringfügige Fingerbewegung verbunden ist, welche die Reibkraft verursacht.

Erfindungsgemäß wird ein Bedienfeld basierend auf Elektrovibration eingesetzt, welches ferner die Detektion von Berührungen ermöglicht. Hierzu kann ein herkömmlicher Touch-Screen genutzt werden, der um die Funktionalität der Veränderung der Reibung mittels Elektrovibration erweitert wurde. Der Touch-Screen kann z.B. ein kapazitiver Touch-Screen bzw. ein optischer Touch-Screen oder auch ein Multitouch-Screen sein. In einer besonders bevorzugten Ausführungsform basiert das Bedienfeld auf dem in der Druckschrift: Olivier Bau, Ivan Poupyrev, Ali Israr, Chris Harrison. 2010. TeslaTouch: Electrovibration for Touch Surfaces. In Proceedings of the 23nd annual ACM symposium on User interface software and technology (UIST '10). ACM, New York, NY, USA, Seiten 283-292 beschriebenen Displays, welches auch unter dem Begriff "TeslaTouch" bekannt ist.

Die in der erfindungsgemäßen Bedieneinrichtung verwendeten Bedienelemente umfassen ein oder mehrere erste Bedienelemente, wobei die erzeugte Reibkraft eines jeweiligen ersten Bedienelements bei dessen Berührung und damit verbundener Fingerbewegung niedriger ist als die bei Berührung und damit verbundener Fingerbewegung erzeugte Reibkraft in einem Bereich des zumindest einen Bedienfelds, der an das jeweilige erste Bedienelement angrenzt und insbesondere das jeweilige erste Bedienelement vollständig umgibt. Das Merkmal der variablen Reibkraft kann dabei durch eine Vielzahl von im Bedienfeld vorgesehenen Elektroden erreicht werden, welche jeweils mit einer separat einstellbaren Wechselspannung gespeist werden.

Erfindungsgemäß wird sichergestellt, dass einem Bediener ein (versehentliches) Herausbewegen seines Fingers aus dem entsprechenden Bedienelement durch Erhöhung der Reibung haptisch vermittelt wird. Dies hat den Vorteil, dass der Bediener auch ohne Blick auf das berührungsempfindliche Bedienfeld eine Maschine bedienen kann. Insbesondere werden Fehlbedienungen vermieden, denn der Bediener wird haptisch über ein Abrutschen aus dem Bedienelement informiert. Die erfindungsgemäße Bedieneinrichtung ist dabei auf einfache Weise ohne zusätzliche Sensoren mittels eines berührungsempfindlichen Bedienfelds bzw. Touch-Screens realisierbar. Darüber hinaus kann die Stärke und Art der haptischen Rückmeldung basierend auf Elektrovibration eingestellt werden, indem die entsprechende Frequenz bzw. Stärke der angelegten Wechselspannung variiert wird. Unter anderem können dabei Gefühle wie leichtes Gleiten, starkes Bremsen oder Kleben an dem Bedienfeld erzeugt werden oder auch das Gefühl einer Vibration vermittelt werden.

Die erfindungsgemäße Bedieneinrichtung dient insbesondere zur Bedienung eines technischen Systems in der Form einer industriellen Automatisierungsanlage oder eines Teils einer Automatisierungsanlage, z.B. einer entsprechenden Maschine in der Automatisierungsanlage. Die Automatisierungsanlage kann dabei eine Anlage zur Fertigungsautomatisierung oder Prozessautomatisierung sein. Bei der Bedienung von industriellen Automatisierungsanlagen tritt häufig das Problem auf, dass der Bediener seinen Blick nicht auf das Bedienfeld, sondern auf die Anlage selbst richtet.
In einer besonders bevorzugten Ausführungsform umfasst die erfindungsgemäße Bedieneinrichtung ein oder mehrere Anzeigefelder zur Anzeige von Informationen betreffend das technische System. Vorzugsweise umfassen das oder die Anzeigefelder eines oder mehrere der Bedienelemente des zumindest einen Bedienfelds. Insbesondere können das oder die Bedienfelder den Anzeigefeldern entsprechen. In einer vorteilhaften Variante ist ein einzelnes Bedienfeld vorgesehen, welches sowohl entsprechende Bedienelemente enthält als auch Informationen zu dem technischen System, wie z.B. eingestellte Parameterwerte, wiedergibt.

Erfindungsgemäß ist zumindest eines der ersten Bedienelemente ein Schiebe- und/oder Drehregler, der durch Berühren und Bewegen eines Fingers des Bedieners entlang eines vorgegebenen Pfads auf dem zumindest einen Bedienfeld einen Bedienbefehl generiert und insbesondere Werte von zumindest einem Parameter des technischen Systems verstellt. Der Pfad kann dabei z.B. in der Form eines Balkens bzw. eines Rings oder eines Teils eines Rings realisiert werden. Das Berühren und Bewegen des Fingers des Bedieners erfolgt entlang des vorgegebenen Pfads durch das Bewegen eines Markers entlang des vorgegebenen Pfads, wobei der Marker die aktuelle Position entlang des vorgegebenen Pfads anzeigt. Auf diese Weise wird dem Bediener intuitiv eine Rückmeldung über seine Bedienaktion gegeben. Werden beispielsweise Parameter durch den Schiebe- bzw. Drehregler verstellt, kann über die aktuelle Position des Markers angezeigt werden, auf welchen Wert der Parameter eingestellt wurde.
In einer besonders bevorzugten Ausführungsform des oben beschriebenen Schiebe- und/oder Drehreglers wird bei einem Übergang der Berührung des Fingers des Bedieners von dem vorgegebenen Pfad in einen zum vorgegebenen Pfad angrenzenden Bereich in Richtung senkrecht zum vorgegebenen Pfad die Reibkraft erhöht. Auf diese Weise wird dem Bediener einfach und schnell ein Abrutschen aus dem Bedienbereich des Schiebe- bzw. Drehreglers angezeigt.

In dem erfindungsgemäßen Schiebe- und/oder Drehreglers variiert die durch Berühren und Bewegen des Fingers des Bedieners entlang des vorgegebenen Pfads erzeugte Reibkraft in Abhängigkeit von der Position der Berührung entlang des vorgegebenen Pfads. Auf diese Weise kann dem Bediener haptisch vermittelt werden, an welcher Stelle er sich entlang des Pfads befindet. Die Reibkraft wird dann größer, wenn durch das Berühren und Bewegen entlang des vorgegebenen Pfads zumindest ein Parameter des technischen Systems auf einen Wert am Rand oder außerhalb eines Sollwertebereichs eingestellt wird. Hierdurch wird der Bediener haptisch darüber informiert, wenn er bei seiner Einstellung einen vorgegebenen Sollwertebereich verlässt.

Zusätzlich zu Schiebe- und/oder Drehreglern können erste Bedienelemente auch als Bedientasten ausgestaltet sein, über welche durch eine Berührung mittels Antippens ein Bedienbefehl generiert wird.
In einer weiteren Ausgestaltung der erfindungsgemäßen Bedieneinrichtung umfasst die Anzahl der Bedienelemente ferner ein oder mehrere zweite Bedienelemente, wobei ein jeweiliges zweites Bedienelement in einer Zone des zumindest einen Bedienfelds enthalten ist, welche bei Berührung durch einen Finger des Bedieners zumindest im Randbereich der Zone eine erhöhte Reibkraft im Vergleich zu einem Bereich des zumindest einen Bedienfelds erzeugt, der an die Zone angrenzt und die Zone insbesondere vollständig umgibt. Auf diese Weise kann ein Bediener darüber informiert werden, wenn er seinen Finger hin zu einem entsprechenden zweiten Bedienelement bewegt. Insbesondere können auf diese Weise Bedienelemente mit sicherheitskritischen Funktionen vor einem versehentlichen Aktivieren geschützt werden. Gegebenenfalls können in der erfindungsgemäßen Bedieneinrichtung auch Bedienelemente vorgesehen sein, welche sowohl die Funktionalität eines ersten als auch die Funktionalität eines zweiten Bedienelements realisieren.

In einer weiteren, besonders bevorzugten Ausführungsform der erfindungsgemäßen Bedieneinrichtung wird bei Generierung oder bei nicht erfolgter Generierung eines Bedienbefehls über ein Bedienelement zumindest eines Teils der Bedienelemente die durch das Bedienelement erzeugte Reibkraft temporär verändert. Die temporäre Veränderung der Reibkraft ist vorzugsweise derart ausgestaltet, dass dem Bediener eine Vibration vermittelt wird. Auf diese Weise kann dem Bediener eine geeignete taktile Rückmeldung über eine erfolgreiche oder eine nicht-erfolgreiche Bedienung eines Bedienelements gegeben werden.

In einer weiteren Ausgestaltung kann die erfindungsgemäße Bedieneinrichtung in einen Einstellmodus geschaltet werden, in dem für zumindest einen Teil der Bedienelemente die bei Berührung des jeweiligen Bedienelements erzeugte Reibkraft und/oder eine bei Berührung erzeugte Reibkraft in einem Bereich eingestellt werden kann, der an das jeweilige Bedienelement angrenzt und insbesondere das jeweilige Bedienelement vollständig umgibt. Auf diese Weise kann ein Bediener flexibel die Funktionalität entsprechender Bedienelemente festlegen. Vorzugsweise kann er in dem Einstellmodus einstellen, ob ein jeweiliges Bedienelement als erstes und/oder als zweites Bedienelement fungiert.

In einer weiteren bevorzugten Variante kann im Einstellmodus ferner der oben beschriebene Sollwertebereich festgelegt werden, bei dessen Verlassen durch ein Berühren und Bewegen des Fingers des Bedieners entlang des vorgegebenen Pfads die Reibkraft erhöht wird.

In einer weiteren Ausführungsform werden durch die erfindungsgemäße Bedieneinrichtung vorbestimmte Bediengesten erkannt, welche ein Bediener mit zumindest einem Finger auf dem zumindest einen Bedienfeld über entsprechende Berührungen durchführt. Dabei wird die bei der Ausführung einer Bediengeste erzeugte Reibkraft heraufgesetzt, wenn die Bediengeste gemäß bestimmten Kriterien unzulässig ist, z.B. weil sie nicht von der Bedieneinrichtung unterstützt wird oder in einem Bereich des Bedienfelds ausgeführt wird, in dem solche Bediengesten nicht möglich sind.

Neben der oben beschriebenen Bedieneinrichtung betrifft die Erfindung ferner ein technisches System, welches die erfindungsgemäße Bedieneinrichtung bzw. eine oder mehrere bevorzugte Varianten der erfindungsgemäßen Bedieneinrichtung umfasst.

Ausführungsbeispiele der Erfindung werden nachfolgend anhand der beigefügten Figuren detailliert beschrieben.

Es zeigen:
- FIG 1: eine schematische Darstellung des Bedienfelds einer Ausführungsform der erfindungsgemäßen Bedieneinrichtung; und
- FIG 2: eine Darstellung des Bedienfelds aus FIG 1 in einem Einstellmodus.

Nachfolgend wird die Erfindung basierend auf einer Bedieneinrichtung für einen Teil einer industriellen Anlage, wie z.B. einem Kühlkreislauf, beschrieben. Dabei können bestimmte Parameter der Anlage geeignet verändert und damit die Anlage gesteuert werden. Zum Beispiel kann die Temperatur in einem Kühlkreislauf angepasst werden oder andere Regelparameter entsprechend verändert werden.

Die im Rahmen der Erfindung verwendete Bedieneinrichtung umfasst ein Bedienfeld basierend auf der bereits eingangs beschriebenen Technologie der Elektrovibration, bei der die berührungsempfindliche Oberfläche des Bedienfelds Elektroden mit darauf befindlicher Isolationsschicht umfasst, wobei an die Elektroden jeweils eine Wechselspannung angelegt wird. Hierdurch wird bei Bewegung eines Fingers des Bedieners auf dem Bedienfeld eine Reibung bzw. Reibkraft generiert, die in geeigneter Weise über Variation der Amplitude bzw. Frequenz der Wechselspannungen variiert werden kann. Dem Bediener wird somit eine taktile Rückmeldung bei Berührung des Bedienfelds gegeben. Die Technologie der Elektrovibration wird in dem erfindungsgemäßen Bedienfeld mit der an sich bekannten Technologie eines Touch-Screens bzw. Touch-Displays kombiniert, mit dem Berührungen auf dem Bedienfeld erfasst werden und in entsprechende Befehle gewandelt werden. In der hier beschriebenen Ausführungsform wird hierzu ein optisches Multitouch-Display verwendet, bei dem diffuses Infrarotlicht von der Unterseite des Bedienfelds auf die Bedienoberfläche strahlt, wobei mit einer Infrarot-Kamera die Berührungen des Displays erfasst werden. Vorzugsweise wird als Bedienfeld das in dem Dokument [1] beschriebene Display verwendet, welches auch unter dem Namen "TeslaTouch" bekannt ist.

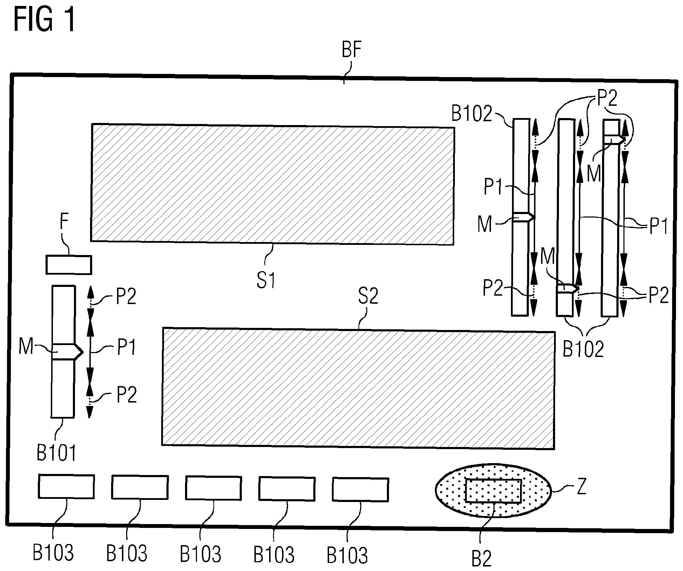

FIG 1 zeigt eine Ausführungsform einer erfindungsgemäßen Bedieneinrichtung mit einem Bedienfeld BF, welches Teil eines größeren Touch-Displays basierend auf Elektrovibration ist. In dem Bedienfeld werden in bestimmten Bereichen Informationen zu der zu bedienenden Anlage angezeigt, was schematisch durch die beiden schraffierten Bereiche S1 und S2 angedeutet ist. Ferner ist eine Vielzahl von Bedienelementen B101, B102, B103 und B2 vorgesehen, welche vom Bediener des Bedienfelds BF über Berührung zur Eingabe von Befehlen und insbesondere zur Parameterverstellung der industriellen Anlage genutzt werden können.

In der Ausführungsform des Bedienfelds BF der FIG 1 sind Bedienelemente B101 und B102 vorgesehen, welche Beispiele von ersten Bedienelementen im Sinne der Patentansprüche darstellen. Das Bedienelement B101 ist im linken Teil des Bedienfelds BF vorgesehen und nach Art eines Schiebereglers bzw. Sliders ausgestaltet. Dabei ist ein vertikal verlaufender Balken vorgesehen, innerhalb dessen sich ein Marker M befindet, der durch Berührung nach oben bzw. unten verschoben werden kann, wodurch ein Wert eines Parameters des technischen Systems, z.B. die Temperatur eines Temperaturkreislaufs, erhöht bzw. erniedrigt wird. Der Marker weist eine Spitze auf, welche auf eine (nicht gezeigte) Skala weist und hierdurch den eingestellten Parameterwert anzeigt. Oberhalb des Bedienelements B101 ist ferner ein Feld F vorgesehen, in dem der entsprechende Parameterwert in textueller Form wiedergegeben wird. Zur Verstellung des Parameterwerts berührt der Bediener den Marker M mit seinem Finger und verfährt diesen nach oben bzw. unten hin zu dem gewünschten Parameterwert. Beim Loslassen des Markers verbleibt dieser in der durch den Bediener gewählten Position und der entsprechende Parameter der technischen Anlage wird auf den gewählten Wert eingestellt.

Das Bedienelement B101 zeichnet sich dadurch aus, dass es dem Bediener eine Rückmeldung gibt, wenn dieser bei der Einstellung des Parameters von dem Bedienelement abrutscht. Ein solches Abrutschen tritt insbesondere bei der Bedienung von industriellen Anlagen auf, bei denen der Bediener bei der Einstellung der Parameter nicht ständig seinen Blick auf das Bedienfeld richtet, sondern auch immer die zu steuernde Anlage im Blick hat. Zur Rückmeldung über ein Abrutschen wird basierend auf dem Prinzip der Elektrovibration die Reibung bzw. Reibkraft im gesamten, den Balken des Bedienfelds B101 umgebenden Bereich gegenüber der Reibkraft innerhalb des Balkens erhöht, so dass dem Bediener bei Bewegung seines Fingers aus dem Bedienelement heraus eine erhöhte Reibung vermittelt wird und er somit die Information erhält, dass er sich nicht mehr innerhalb des Bedienelements befindet.

Das Bedienelement B101 weist ferner eine variierende Reibkraft innerhalb seines Balkens auf, um hierdurch dem Benutzer anzuzeigen, wenn er den entsprechenden Parameter auf einen Wert außerhalb eines Sollwertebereichs einstellt. In FIG 1 ist der Sollwertebereich durch den Doppelpfeil P1 und die Bereiche der Parameterwerte außerhalb des Sollwertebereichs durch daran anschließende Doppelpfeile P2 angedeutet. Die Pfeile sind dabei nicht Teil des dargestellten Bedienfelds. Die über Elektrovibration vermittelte Reibung ist derart eingestellt, dass sie in den Bereichen P2 höher ist als in den Bereichen P1. Bewegt somit der Bediener den Marker M von dem Bereich P1 in die Bereiche P2, wird ihm dies durch eine stärkere Reibung vermittelt, so dass er darauf hingewiesen wird, dass er den Sollwertebereich des Parameters verlässt. Nichtsdestotrotz ist die Reibkraft innerhalb des Balkens an jeder Stelle geringer als die Reibkraft in der Umgebung des Balkens, so dass dem Bediener bei einer Bewegung aus dem Balken heraus und insbesondere in horizontaler Richtung immer über die Reibung vermittelt wird, dass er von dem Bedienelement abrutscht.

Die Einstellung der Reibung bzw. Reibkraft über Elektrovibration ist an sich bekannt und erfolgt über die Einstellung der Amplitude bzw. Frequenz von Wechselspannungen, die an Elektroden im Bedienfeld anliegen. Dabei kann dem Benutzer gegebenenfalls auch das Gefühl einer leicht gleitenden bzw. rutschigen Oberfläche vermittelt werden. Insbesondere wird im entsprechenden Sollwertebereich P1 die Reibkraft stark vermindert, so dass hier die Bewegung des Markers durch den Bediener besonders leicht durchgeführt werden kann.

Neben dem Bedienelement B101 sind in der Ausführungsform der FIG 1 beispielhaft noch drei weitere Bedienelemente B102 im rechten Bereich des Displays wiedergegeben. Diese Bedienelemente sind analog zu dem Bedienelement B101 aufgebaut. Das heißt, sie sind wiederum als Schieberegler mit Marker M ausgestaltet, bei denen ein Abrutschen von dem Regler über eine erhöhte Reibkraft in der Umgebung der Balken der Bedienelemente vermittelt wird und ferner ein Sollwertebereich über eine Verminderung der Reibung innerhalb der Balken angezeigt wird. Analog zu dem Bedienelement B101 wurden dabei zur Bezeichnung des Sollwertebereichs bzw. des Bereichs außerhalb des Sollwertebereichs die Doppelpfeile P1 bzw. P2 verwendet.

Neben den Bedienelementen B101 und B102 in der Form von Schiebereglern umfasst das Bedienfeld BF ferner mehrere Bedienelemente B103 im unteren Teil des Bedienfelds BF, welche weitere Beispiele von ersten Bedienelementen im Sinne der Patentansprüche darstellen. Im Unterschied zu den Bedienelementen B101 und B102 sind diese Bedienelemente als Bedientasten ausgestaltet, welche über Berührung eine entsprechende Bedienaktion auslösen. Da mit der Berührung auch immer eine geringfügige Bewegung des Fingers des Bedieners einhergeht, wird dem Bediener über Elektrovibration auch immer eine vorbestimmte Reibung vermittelt.

In Analogie zu den Bedienelementen B101 und B102 ist die Reibung in der Umgebung um den Rand der entsprechenden Bedienfelder B103 entsprechend erhöht, wodurch wiederum erreicht wird, dass einem Bediener ein Abrutschen von den entsprechenden Bedientasten vermittelt wird. Die Bedientasten B103 können je nach Bedarf unterschiedliche Funktionalitäten übernehmen. Insbesondere kann z.B. der Start bzw. der Stopp der entsprechenden technischen Anlage durch Berühren der Bedientasten angewiesen werden. Ebenso können Funktionen realisiert werden, welche die Konfiguration des Bedienfelds selbst betreffen, z.B. können Anzeigemodi gewechselt werden bzw. eine Hilfefunktion aufgerufen werden.

In der hier beschriebenen Ausführungsform sind die Bedienelemente B103 ferner derart ausgestaltet, dass dem Bediener eine Aktivierung der entsprechenden Bedientaste basierend auf dem Prinzip der Elektrovibration vermittelt wird. Dabei wird temporär bei der Berührung des entsprechenden Bedienfelds die Reibung derart verändert, dass dem Benutzer das Gefühl einer Vibration vermittelt wird, wodurch er Rückmeldung über die erfolgreiche Aktivierung der Taste bekommt.

In der Ausführungsform des Bedienfelds der FIG 1 ist ferner eine weitere Bedientaste B2 vorgesehen, welche ein Beispiel eines zweiten Bedienelements im Sinne der Patentansprüche darstellt. Diese Taste dient zur Aktivierung einer kritischen Funktion, wie z.B. dem kompletten Abschalten der Bedieneinrichtung. Hierfür ist es sinnvoll, dass dem Bediener geeignet vermittelt wird, dass er im Begriff ist, eine sicherheitskritische Funktion durchzuführen. Demzufolge ist eine Zone Z vorgesehen, die in FIG 1 als gepunkteter elliptischer Bereich angedeutet ist und nicht Teil des dargestellten Bedienfelds ist. Die Zone enthält das Bedienelement B2 und weist im Vergleich zum Bereich außerhalb der Zone eine erhöhte Reibung auf, welche wiederum über Elektrovibration generiert wird. Hierdurch wird dem Bediener vermittelt, wenn er mit seinem Finger z.B. versehentlich in die Nähe der Bedientaste B2 rutscht. Er wird somit auf die Gefahr einer versehentlichen Aktivierung einer sicherheitskritischen Funktion hingewiesen.

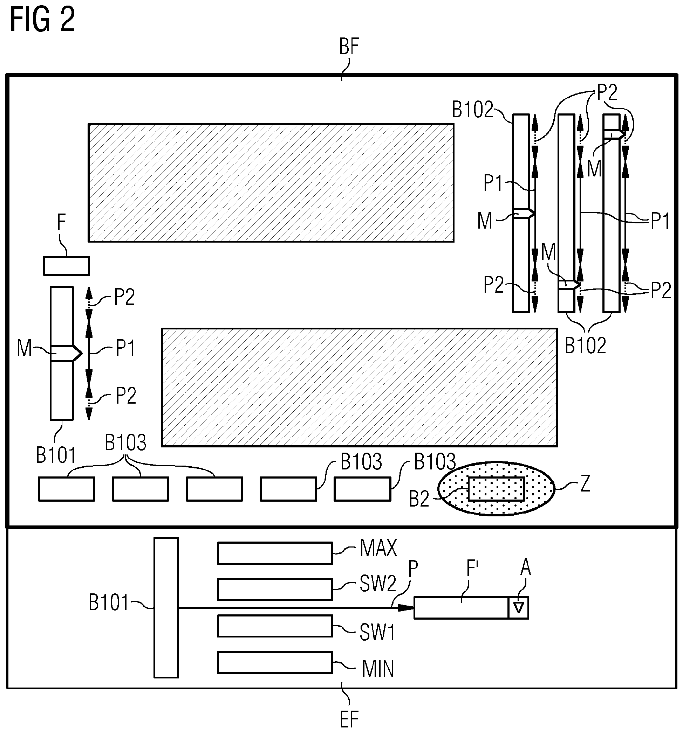

FIG 2 zeigt das Bedienfeld BF der FIG 1 in einem Einstellmodus (oft auch als "Engineering-System" bezeichnet), der in geeigneter Weise durch den Bediener, z.B. über ein entsprechendes Bedienelement B103, aktiviert werden kann. Dabei wird auf dem Display zusätzlich zu dem Bedienfeld BF ein Feld EF wiedergegeben, über das die Funktionalität entsprechender Bedienelemente eingestellt bzw. verändert werden kann. In der Darstellung der FIG 2 wurde das Bedienelement B101 zur Einstellung über das Einstellfeld EF ausgewählt. Dabei wird dem Bediener eine Darstellung des Balkens des Bedienfelds B101 im Bereich EF angezeigt.

Der Bediener hat nunmehr verschiedene Möglichkeiten, Einstellungen für das Bedienelement vorzunehmen. Über das Feld F', auf das ein Pfeil P zeigt, kann er mit dem Auswahlelement A festlegen, ob das Bedienelement ein erstes Bedienelement oder ein zweites Bedienelement im Sinne der Ansprüche darstellen soll. Bei Aktivierung des Auswahlelements werden in einer Dropdown-Liste die entsprechenden anwählbaren Optionen angezeigt. Die gewählte Option wird dann im Feld F' wiedergegeben. Wird das Bedienelement als erstes Bedienelement über das Auswahlelement A spezifiziert, wird die Reibung um den Balken erhöht und hierdurch die oben beschriebene Rückmeldung über ein Abrutschen gegeben. Wird demgegenüber das Bedienelement als zweites Bedienelement spezifiziert, wird der Bediener auf ein Hinrutschen zu dem Bedienelement hingewiesen, was über das Festlegen einer Zone Z in Analogie zu dem Bedienelement B2 erfolgt. Die Zone weist dabei im Vergleich zur Umgebung um die Zone eine erhöhte Reibung auf.

In dem Szenario der FIG 2 wurde über das Auswahlelement A die oben beschriebene Funktionalität der Rückmeldung eines Abrutschens ausgewählt. Der Bediener hat dann die Möglichkeit, zusätzlich einen entsprechenden Sollwertebereich für den über das Bedienelement zu verstellenden Parameter festzulegen. Insbesondere kann der Bediener in dem Feld MIN den kleinsten Parameterwert und im Feld MAX den größten Parameterwert eingeben, der über das Bedienelement B101 einzustellen ist. Über das Feld SW1 legt er ferner die untere Grenze des Sollwertebereichs und über SW2 die obere Grenze des Sollwertebereichs durch Eingabe geeigneter Parameterwerte fest. Als Folge wird dann in dem Balken des Bedienelements B101 die Reibung im Sollwertebereich gegenüber dem restlichen Bereich des Balkens herabgesetzt. Die entsprechende Eingabe von Werten in den Feldern MAX, MIN, SW1 bzw. SW2 kann in geeigneter Weise z.B. über ein separates Eingabegerät in der Form einer Tastatur oder über ein separates, auf dem Bildschirm wiedergegebenes Eingabefeld vorgenommen werden.

Gegebenenfalls können über das Einstellfeld EF auch noch weitere Einstellungen vorgenommen werden. Beispielsweise kann festgelegt werden, ob eine Rückmeldung bei erfolgreicher Bedienung des entsprechenden Bedienelements über die oben beschriebene Vibration gegeben wird oder nicht. Dabei können für die Einstellung weiterer Eigenschaften des Bedienelements noch zusätzliche Checkboxen vorgesehen sein. In einer weiteren Ausführungsform können in der Bedieneinrichtung auch Bedienelemente vorgesehen sind, welche separat von dem Bedienfeld BF angeordnet sind und z.B. als einzelne Tasten realisiert werden. Diese separaten Bedienelemente sind genauso wie die jeweiligen Bedienelemente B101, B102, B103 bzw. B2 aufgebaut und jeweils in einem einzelnen kleinen, nur für das entsprechende Bedienelement vorgesehenen Touch-Display angeordnet, das wiederum basierend auf Elektrovibration arbeitet.

Die im Vorangegangenen beschriebenen Ausführungsformen der erfindungsgemäßen Bedieneinrichtung weisen eine Reihe von Vorteilen auf. Insbesondere kann einem Bediener in geeigneter Weise über die Einstellung der Reibung basierend auf dem Prinzip der Elektrovibration ein Abrutschen bzw. gegebenenfalls auch ein Hinrutschen zu entsprechenden Bedienelementen vermittelt werden. Ferner kann dem Bediener haptisch rückgemeldet werden, wenn er bei einer Parametereinstellung einen Sollwertebereich verlässt. Zusätzlich kann dem Bediener auch die erfolgreiche Aktivierung eines Bedienelements über eine taktile Rückmeldung, z.B. über eine Vibration, angezeigt werden.

In der erfindungsgemäßen Bedieneinrichtung kann auf eine separate Hardware zur Generierung eines haptischen bzw. taktilen Feedbacks, wie z.B. entsprechende Haptikaktuatoren, verzichtet werden, wodurch die Produktionskosten der Bedieneinrichtung vermindert werden. Außerdem weisen herkömmliche taktile Aktuatoren den Nachteil auf, dass durch ihren Einsatz für das Bediengerät keine garantierte Dichtigkeit über längere Zeit gewährleistet werden kann, da durch die auftretende Vibration z. B. Dichtungen über längere Zeit kaputt gehen (spröde werden etc.) und somit nicht für industrietaugliche Geräte (z. B. gemäß der Schutzart IP65) eingesetzt werden können.

Mit der erfindungsgemäßen Bedieneinrichtung wird eine Bedienung eines berührungsempfindlichen Bedienfelds verbessert und hierdurch die Fehlerhäufigkeit von Fehlbedienungen vermindert. Ferner kann ein Bedienfeld basierend auf Elektrovibration einfach hergestellt werden, so dass Produktionskosten eingespart werden. Insbesondere müssen keine separaten Hardware-Bedienelemente, wie z.B. Handräder, Tiefdrucktaster und dergleichen, vorgesehen werden. Je nach Anwendungsfall können mit der Bedieneinrichtung unterschiedliche Rückmeldungen basierend auf Elektrovibration realisiert werden. Im Besonderen kann eine raue Oberfläche durch Erhöhung der Reibung bzw. eine gleitfähige Oberfläche durch Verminderung der Reibung sowie gegebenenfalls auch eine Vibration erzeugt werden.

## Patentansprüche

1. Bedieneinrichtung für ein technisches System, umfassend zumindest ein berührungsempfindliches Bedienfeld (BF), das bei Bewegung zumindest eines Fingers eines Bedieners auf seiner Oberfläche basierend auf Elektrovibration eine einstellbare und für den Bediener wahrnehmbare Reibkraft erzeugt,
- wobei in dem zumindest einen Bedienfeld (BF) eine Anzahl von Bedienelementen (B101, B102, B103, B2) vorgesehen ist und durch Berühren eines jeweiligen Bedienelements (B101, B102, B103, B2) mit zumindest einem Finger des Bedieners und durch eine Fingerbewegung die Reibkraft erzeugt und ein Bedienbefehl generiert wird, wobei zumindest ein Teil der Bedienbefehle Steuerbefehle für das technische System sind,
- wobei die Anzahl der Bedienelemente (B101, B102, B103, B2) ein oder mehrere erste Bedienelemente (B101, B102, B103) umfasst, wobei die erzeugte Reibkraft eines jeweiligen ersten Bedienelements (B101, B102, B103) bei dessen Berührung und damit verbundener Fingerbewegung niedriger ist als die bei Berührung und damit verbundener Fingerbewegung erzeugte Reibkraft in einem Bereich des zumindest einen Bedienfelds (BF), der an das jeweilige erste Bedienelement (B101, B102, B103) angrenzt,
- wobei das technische System eine industrielle Automatisierungsanlage oder ein Teil einer industriellen Automatisierungsanlage ist,
- wobei zumindest eines der ersten Bedienelemente (B101, B102, B103) ein Schiebe- und/oder Drehregler (B101, B102) ist, der zur Generierung eines Bedienbefehls durch Berühren und Bewegen eines Fingers des Bedieners entlang eines vorgegebenen Pfads auf dem zumindest einen Bedienfeld (BF) und zur Verstellung von Werten von zumindest einem Parameter des technischen Systems vorgesehen ist,
- wobei das Berühren und Bewegen des Fingers des Bedieners entlang des vorgegebenen Pfads durch das Bewegen eines Markers (M) entlang des vorgegebenen Pfads erfolgt, wobei der Marker (M) zur Anzeige der aktuellen Position entlang des vorgegebenen Pfads vorgesehen ist und
- wobei die durch Berühren und Bewegen des Fingers des Bedieners entlang des vorgegebenen Pfads erzeugte Reibkraft in Abhängigkeit von der Position der Berührung entlang des vorgegebenen Pfads variiert, wobei die Reibkraft dann größer wird, wenn durch das Berühren und Bewegen entlang des vorgegebenen Pfads zumindest ein Parameter des technischen Systems auf einen Wert am Rand oder außerhalb eines Sollwertebereichs eingestellt wird.

2. Bedieneinrichtung nach Anspruch 1, wobei der Bereich, der an das jeweilige erste Bedienelement (B101, B102, B103) angrenzt, das jeweilige erste Bedienelement (B101, B102, B103) vollständig umgibt.

3. Bedieneinrichtung nach Anspruch 1 oder 2, wobei die Bedieneinrichtung ein oder mehrere Anzeigefelder zur Anzeige von Informationen betreffend das technische System umfasst.

4. Bedieneinrichtung nach Anspruch 3, wobei das oder die Anzeigefelder eines oder mehrere der Bedienelemente (B101, B102, B103, B2) des zumindest einen Bedienfelds (BF) umfassen.

5. Bedieneinrichtung nach einem der vorhergehenden Ansprüche, wobei die Reibkraft bei einem Übergang der Berührung des Fingers des Bedieners von dem vorgegebenen Pfad in einen zum vorgegebenen Pfad angrenzenden Bereich in Richtung senkrecht zum vorgegebenen Pfad erhöht wird.

6. Bedieneinrichtung nach einem der vorhergehenden Ansprüche, wobei eines oder mehrere der ersten Bedienelemente (B101, B102, B103) Bedientasten sind, über welche durch eine Berührung mittels Antippens ein Bedienbefehl generiert wird.

7. Bedieneinrichtung nach einem der vorhergehenden Ansprüche, wobei die Anzahl der Bedienelemente (B101, B102, B2) ein oder mehrere zweite Bedienelemente (B2) umfasst, wobei ein jeweiliges zweites Bedienelement (B2) in einer Zone (Z) des zumindest einen Bedienfelds (B) enthalten ist, welche bei Berührung durch einen Finger des Bedieners zumindest im Randbereich der Zone (Z) eine erhöhte Reibkraft im Vergleich zu einem Bereich des zumindest einen Bedienfelds erzeugt, der an die Zone (Z) angrenzt.

8. Bedieneinrichtung nach einem der vorhergehende Ansprüche, wobei bei der Generierung oder bei nicht erfolgter Generierung eines Bedienbefehls über ein Bedienelement (B101, B102, B103, B2) zumindest eines Teils der Bedienelemente (B101, B102, B103, B2) die durch das Bedienelement (B101, B102, B103, B2) erzeugte Reibkraft temporär verändert wird, wobei die temporäre Veränderung der Reibkraft vorzugsweise derart ausgestaltet ist, dass dem Bediener eine Vibration vermittelt wird.

9. Bedieneinrichtung nach einem der vorhergehenden Ansprüche, wobei die Bedieneinrichtung in einen Einstellmodus geschaltet werden kann, in dem durch den Bediener für zumindest einen Teil der Bedienelemente (B101, B102, B103, B2) die bei Berührung des jeweiligen Bedienelements (B101, B102, B103, B2) erzeugte Reibkraft und/oder eine bei Berührung erzeugte Reibkraft in einem Bereich eingestellt werden kann, der an das jeweilige Bedienelement (B101, B102, B103, B2) angrenzt.

10. Bedieneinrichtung nach Anspruch 9, wobei in dem Einstellmodus eingestellt werden kann, ob ein jeweiliges Bedienelement (B101, B102, B103, B2) als erstes und/oder zweites Bedienelement (B101, B102, B103, B2) fungiert.

11. Bedieneinrichtung nach Anspruch 9 oder 10, wobei im Einstellmodus der Sollwertebereich eingestellt werden kann, bei dessen Verlassen durch ein Berühren und Bewegen des Fingers des Bedieners entlang des vorgegebenen Pfads die Reibkraft erhöht wird.

12. Bedieneinrichtung nach einem der vorhergehenden Ansprüche, wobei durch die Bedieneinrichtung vorbestimmte Bediengesten erkannt werden, welche ein Bediener mit zumindest einem Finger auf dem zumindest einen Bedienfeld (BF) durchführt, wobei die bei der Ausführung einer Bediengeste erzeugte Reibkraft heraufgesetzt wird, wenn die Bediengeste unzulässig ist.

13. Technisches System, **dadurch gekennzeichnet, dass** das technische System eine Bedieneinrichtung nach einem der vorhergehenden Ansprüche umfasst.

## Claims

1. Operator control device for a technical system, comprising at least one touch-sensitive operator control panel (BF) which produces, based on electrical vibration, an adjustable and operator-perceptible frictional force when the operator moves at least one finger on the surface thereof,
- wherein in the at least one operator control panel (BF) a number of operator control elements (B101, B102, B103, B2) are provided and the frictional force is produced and an operator command is generated by the operator touching a respective operator control element (B101, B102, B103, B2) with at least one finger and associated finger movement, wherein at least some of the operator commands are control commands for the technical system,
- wherein the number of operator control elements (B101, B102, B103, B2) can comprise one or more first operator control elements (B101, B102, B103), wherein the frictional force produced when a respective first operator control element (B101, B102, B103) is touched and an associated finger movement occurs is lower than the frictional force produced in response to touch and associated finger movement in a region of the at least one operator control panel (BF) bordering the respective first operator control element (B101, B102, B103),
- wherein the technical system is an industrial automation installation or part of an industrial automation installation,
- wherein at least one of the first operator control elements (B101, B102, B103) is a control slider and/or dial (B101, B102) which, in response to operator finger contact and movement along a predefined path on the at least one operator control panel (BF), generates an operator command and in particular adjusts values of at least one parameter of the technical system,
- wherein the operator finger contact and movement along the predefined path takes place by moving a marker (M) along the predefined path, wherein the marker (M) indicates the current position along the predefined path and
- wherein the frictional force produced by operator finger contact and movement along the predefined path is varied as a function of the position of the contact along the predefined path, wherein the frictional force then increases if contact and movement along the predefined path causes at least one parameter of the technical system to be set to a value on the edge of or outside a setpoint range.

2. Operator control device according to claim 1, wherein the region bordering the respective first operator control element (B101, B102, B103) completely surrounds the respective first operator control element (B101, B102, B103).

3. Operator control device according to claim 1 or 2, wherein the operator control device comprises one or more display panels for displaying information relating to the technical system.

4. Operator control device according to claim 3, wherein the display panel(s) comprise one or more of the operator control elements (B101, B102, B103, B2) of the at least one operator control panel (BF).

5. Operator control device according to one of the preceding claims, wherein the frictional force is increased if the operator's finger contact moves from the predefined path to an area bordering the predefined path in a direction perpendicular to the predefined path.

6. Operator control device according to one of the preceding claims, whereinone or more of the first operator control elements (B101, B102, B103) are control buttons via which an operator command is generated by touch in the form of tapping.

7. Operator control device according to one of the preceding claims, wherein the number of operator control elements (B101, B102, B2) comprises one or more second operator control elements (B2), wherein a respective second operator control element (B2) is contained in a zone (Z) of the at least one operator control panel (B) which produces a higher frictional force at least in the edge region of the zone (Z) than in an area of the at least one operator control panel bordering the zone (Z) in response to operator finger contact.

8. Operator control device according to one of the preceding claims, wherein when an operator command is generated or fails to be generated via an operator control element (B101, B102, B103, B2) of at least some of the operator control elements (B101, B102, B103, B2), the frictional force produced by the operator control element (B101, B102, B103, B2) is temporarily changed, wherein the temporary change in the frictional force is preferably designed such that the operator experiences a vibration.

9. Operator control device according to one of the preceding claims, wherein the operator control device can be switched to a setting mode in which, for at least some of the operator control elements (B101, B102, B103, B2), the frictional force produced in response to touching of the respective operator control element (B101, B102, B103, B2) and/or a frictional force produced in an area bordering the respective operator control element (B101, B102, B103, B2) can be set by the operator.

10. Operator control device according to claim 9, wherein in setting mode it can be set whether a respective operator control element (B101, B102, B103, B2) functions as a first and/or second operator control element (B101, B102, B103, B2).

11. Operator control device according to claim 9 or 10, wherein in setting mode the setpoint range can be set, departure from which causes the frictional force to be increased in response to operator finger contact and movement along the predefined path.

12. Operator control device according to one of the preceding claims, wherein predetermined control gestures performed by an operator using at least one finger on the at least one operator control panel (BF) can be recognised by the operator control device, wherein the frictional force produced in response to the operator control gesture is reduced if the gesture is impermissible.

13. Technical system, **characterised in that** the technical system comprises an operator control device according to one of the preceding claims.

## Revendications

1. Dispositif de commande d'un système technique, comprenant au moins un panneau (BF) de commande sensible au toucher, qui, lorsqu'au moins un doigt d'un opérateur passe sur sa surface, produit, sur la base d'une vibration électrique, une force de friction réglable et perceptible par l'opérateur,
- dans lequel il est prévu, dans le au moins un panneau (BF) de commande, un certain nombre d'éléments (B101, B102, B103, B2) de commande et, en touchant un élément (B101, B102, B103, B2) de commande respectif, par au moins un doigt de l'opérateur et par un déplacement du doigt, la force de friction est produite et une instruction de commande est créée, au moins une partie des instructions de commande étant des instructions de commande du système technique,
- dans lequel le nombre des éléments (B101, B102, B103, B2) de commande comprend un ou plusieurs premiers éléments (B101, b102, b103) de commande, la force de friction produite d'un premier élément (B101, B102, B103) de commande, lors de son toucher, et ainsi le déplacement de doigt qui s'y attache, étant plus petite que la force de friction produite, lors du toucher et du déplacement de doigt qui s'y attache, dans une région du au moins un panneau (BF) de commande, qui est voisine du premier élément (B101, B102, B103) de commande,
- dans lequel le système technique est une installation d'automatisation industrielle ou une partie d'une installation d'automatisation industrielle,
- dans lequel au moins l'un des premiers éléments (B101, B102, B103) de commande est un régleur (B101, B102), coulissant et/ou tournant, qui est prévu pour créer une instruction de commande par toucher et déplacement d'un doigt de l'opérateur le long d'un trajet donné à l'avance sur le au moins un panneau (BF) de commande et pour régler des valeurs d'au moins un paramètre du système technique,
- dans lequel le toucher et le déplacement du doigt de l'opérateur le long du trajet donné à l'avance s'effectuent par le déplacement d'un repère (M) le long du trajet donné à l'avance, le repère (M) étant prévu pour afficher la position instantanée le long du trajet donné à l'avance et
- dans lequel la force de friction produite par toucher et déplacement du doigt de l'opérateur le long du trajet donné à l'avance varie en fonction de la position du toucher le long du trajet donné à l'avance, la force de friction étant plus grande lorsque, par le toucher et le déplacement le long du trajet donné à l'avance, au moins un paramètre du système technique est réglé à une valeur au bord ou à l'extérieur d'une plage de valeurs de consigne.

2. Dispositif de commande suivant la revendication 1, dans lequel la région voisine du premier élément (B101, B102, B103) de commande entoure complètement le premier élément (B101, B102, B103) de commande.

3. Dispositif de commande suivant la revendication 1 ou 2, dans lequel le dispositif de commande comprend un ou plusieurs panneaux d'affichage pour afficher des informations concernant le système technique.

4. Dispositif de commande suivant le revendication 3, dans lequel le ou les panneaux d'affichage comprennent un ou plusieurs des éléments (B101, B102, B103, B2) de commande du au moins un panneau (BF) de commande.

5. Dispositif de commande suivant l'une des revendications précédentes, dans lequel la force de friction au passage du toucher du doigt de l'opérateur du trajet donné à l'avance à une région voisine du trajet donné à l'avance est augmentée dans une direction perpendiculaire au trajet donné à l'avance.

6. Dispositif de commande suivant l'une des revendications précédentes, dans lequel un ou plusieurs des premiers éléments (B101, B102, B103) de commande sont des touches de commande par lesquelles il est créé, au moyen d'impulsions, une instruction de commande.

7. Dispositif de commande suivant l'une des revendications précédentes, dans lequel le nombre d'éléments (B101, B102, B2) de commande comprend un ou plusieurs deuxièmes éléments (B2) de commande, un deuxième élément (B2) de commande étant contenu dans une zone (Z) du au moins un panneau (B) de commande, qui, lors du toucher par un doigt de l'opérateur, produit, au moins dans une zone de bord de la zone (Z), une force de friction plus grande que dans une région du au moins un panneau de commande, qui est voisine de la zone (Z).

8. Dispositif de commande suivant l'une des revendications précédentes, dans lequel, lors de la création ou lors de la création non couronnée de succès d'une instruction de commande par un élément (B101, B102, B103, B2) de commande d'au moins une partie des éléments (B101, B102, B103, B2) de commande, la force de friction produite par l'élément (B101, B102, B103, B2) de commande est modifiée temporairement, la modification temporaire de la force de friction étant conformée, de préférence, de manière à procurer une vibration à l'opérateur.

9. Dispositif de commande suivant l'une des revendications précédentes, dans lequel le dispositif de commande peut être mis dans un mode de réglage, dans lequel peut être réglée par l'opérateur, pour au moins une partie des éléments (B101, B102, B103, B2) de commande, la force de friction produite lors du toucher de l'élément (B101, B102, B103, B2) de commande respectif et/ou une force de friction produite lors du toucher dans une région, qui est voisine de l'élément (B101, B102, B103, B2) de commande.

10. Dispositif de commande suivant la revendication 9, dans lequel, dans le mode de réglage, on peut régler, si un élément (B101, B102, B103, B2) de commande fonctionne comme premier et/ou deuxième élément (B101, B102, B103, B2) de commande.

11. Dispositif de commande suivant la revendication 9 ou 10, dans lequel, dans le mode de réglage, peut être réglée la plage de valeurs de consigne, qui, lorsqu'elle est quittée par un toucher ou un déplacement du doigt de l'opérateur le long du trajet donné à l'avance, augmente la force de friction.

12. Dispositif de commande suivant l'une des revendications précédentes, dans lequel, par le dispositif de commande, peuvent être détectés des gestes de commande définis à l'avance, qu'un opérateur effectue par au moins un doigt sur le au moins un panneau (BF) de commande, la force de friction produite, lors de l'exécution d'un geste de commande, étant majorée, si le geste de l'opérateur est inadmissible.

13. Système technique, **caractérisé en ce que** le système technique comprend un dispositif de commande suivant l'une des revendications précédentes.
